# EUROPEAN PATENT APPLICATION

(11) **EP 4 570 416 A1**
(43) Date of publication of application: **18.06.2025**
(21) Application number: 23883150.7
(22) Date of filing: 26.10.2023
(51) Int. Cl.: B23K 26/362, B23K 26/16, B23K 26/70, B23K 37/00, B23Q 11/00, H01M 4/04, B08B 15/04

(54) **LASER NOTCHING SYSTEM**

(30) Priority: 26.10.2022 KR 20220139217; 25.10.2023 KR 20230144157
(71) Applicant: LG Energy Solution, Ltd., Seoul 07335 (KR)
(72) Inventor: KIM, Sang-Yeol, Daejeon 34122 (KR); PARK, Jong-Sik, Daejeon 34122 (KR); KIM, Hak-Kyun, Daejeon 34122 (KR); LEE, Jae-Eun, Daejeon 34122 (KR); LEE, Je-Jun, Daejeon 34122 (KR)
(74) Representative: Goddar, Heinz J.
(86) International application number: PCT/KR2023/016804
(87) International publication number: WO 2024/091045

(57) **Abstract**

A laser notching system according to an embodiment of the present disclosure includes a transport unit configured to transport an electrode including a coated portion with active material coating and an uncoated portion without active material coating; a support unit including a first support unit configured to support the coated portion and a second support unit configured to support the uncoated portion; a laser unit configured to emit a laser to the uncoated portion supported by the second support unit above the second support unit to notch the uncoated portion; and a suction unit configured to suck impurities produced during the laser notching of the uncoated portion passing the second support unit.

## Description

### TECHNICAL FIELD

The present disclosure relates to a laser notching system.

The present application claims the benefit of Korean Patent Application No. 10-2022-0139217 filed on October 26, 2022 and Korean Patent Application No. 10-2023-0144157 filed on October 25, 2023 with the Korean Intellectual Property Office, the disclosures of which are incorporated herein by reference in its entirety.

### BACKGROUND ART

A process of notching a portion of an electrode may be used in the manufacture of an electrode assembly used in a battery. The notching process may use, for example, laser notching. An electrode web of a large size may be notched using a laser to make unit electrodes, or a specific portion of an electrode may be cut into a desired shape.

During the laser notching, impurities may be produced, and in some cases, the impurities may enter the notched portion and even the unnotched portion. In particular, when the impurities enter the active material coated portion, it may affect the quality of the electrode.

Accordingly, there is a need for development of a laser notching system configured to solve the above-described problem.

### DISCLOSURE

### Technical Problem

The present disclosure is designed to solve the above-described problem, and therefore the present disclosure is directed to providing a laser notching system configured to minimize movements of an electrode during laser notching of the electrode.

The present disclosure is further directed to providing a laser notching system configured to prevent impurities produced during laser notching from entering other portion than a laser notched portion.

However, the problems of the present disclosure to be solved are not limited to the above-described problems, and these and other problems will be clearly understood by those skilled in the art from the following description.

### Technical Solution

To solve the above-described problem, a laser notching system according to an embodiment of the present disclosure includes a transport unit configured to transport an electrode including a coated portion with active material coating and an uncoated portion without active material coating; a support unit including a first support unit configured to support the coated portion and a second support unit configured to support the uncoated portion; a laser unit configured to emit a laser to the uncoated portion supported by the second support unit above the second support unit to notch the uncoated portion; and a suction unit configured to suck impurities produced during the laser notching of the uncoated portion passing the second support unit.

The second support unit may include a laser receiving portion at a location corresponding to an irradiation area of the laser for the notching the uncoated portion.

The laser receiving portion may be a hole passing through the second support unit or a groove formed in the second support unit to a predetermined depth.

The suction unit may be disposed at a side of the second support unit.

The suction unit may be configured to suck the impurities in a direction toward the second support unit from the first support unit.

The laser notching system may include an impurity discharge portion that communicates with the laser receiving portion.

The suction unit may be configured to suck air of the impurity discharge portion.

The laser notching system may include an impurity barrier unit configured to prevent the impurities produced during the laser notching of the uncoated portion passing the second support unit from shattering to the coated portion.

The impurity barrier unit may be disposed at a boundary area between the first support unit and the second support unit, and spaced a predetermined distance apart above the electrode.

At least a part of the support unit may have a specific curvature.

At least a part of the impurity barrier unit may have a specific curvature.

The part of the impurity barrier unit having the specific curvature and the part of the support unit having the specific curvature may face each other.

The curvature of the part of the impurity barrier unit facing the support unit may be equal to or smaller than the specific curvature of the support unit.

The laser notching system may include a blower unit configured to prevent the impurities produced during the laser notching of the uncoated portion passing the second support unit from shattering to the first support unit.

The blower unit may be configured to blow air in a direction toward the second support unit from the first support unit.

The laser notching system may include a blower unit configured to blow air in a direction toward the second support unit from the first support unit through a space between the impurity barrier unit and the support unit.

### Advantageous Effects

According to an aspect of the present disclosure, impurities produced at the laser receiving portion during laser notching may be discharged into the impurity discharge portion. The impurities may be discharged into the impurity discharge portion below the laser receiving portion by gravity.

According to another aspect of the present disclosure, the suction unit may effectively remove impurities produced at the laser receiving portion during laser notching. It may be possible to effectively remove impurities, thereby preventing the impurities from entering the coated portion. Since the suction unit communicates with the impurity discharge portion, it may be possible to remove impurities falling by gravity more effectively. Since the suction unit forms the suction pressure in the direction approximately perpendicular to the movement direction of the electrode and the laser irradiation direction, it may be possible to minimize the influence on the movement of the electrode. Accordingly, since the electrode is not affected by the suction unit while moving, the laser focus does not move, thereby achieving effective laser notching.

According to another aspect of the present disclosure, the impurity barrier unit may effectively prevent impurities produced during laser notching of the uncoated portion passing the second support unit from shattering to the coated portion. In particular, when the impurity barrier unit is applied together with the suction unit, it may be possible to maximize the impurity barrier effect, thereby preventing the quality degradation of the electrode due to impurity buildup on the coated portion.

According to another aspect of the present disclosure, the blower unit may prevent impurities produced at the laser receiving portion during laser notching from building up on the laser receiving portion and/or the uncoated portion and/or the second support unit. Since the blower unit is disposed at the location approximately corresponding to the suction unit, it may be possible to remove impurities more effectively. Since the blower unit blows air in the direction approximately perpendicular to the movement direction of the electrode and laser irradiation direction, it may be possible to minimize the influence on the movement of the electrode. Accordingly, since the electrode is not affected by the blower unit while moving, the laser focus does not move, thereby achieving effective laser notching.

### BRIEF DESCRIPTION OF THE DRAWINGS

FIG. 1 is a conceptual diagram of a laser notching system according to an embodiment of the present disclosure.
FIG. 2 is a diagram showing an electrode supported by a support unit included in a laser notching system according to an embodiment of the present disclosure.
FIG. 3 is a diagram showing a support unit included in a laser notching system according to an embodiment of the present disclosure and an electrode that is notched by the laser notching system.
FIG. 4 is a side view of FIG. 3.
FIG. 5 is a diagram showing a support unit and a suction unit included in a laser notching system according to an embodiment of the present disclosure and an electrode that is notched by the laser notching system.
FIG. 6 is a schematic side view of FIG. 5.
FIG. 7 is a diagram showing a support unit and an impurity barrier unit included in a laser notching system according to another embodiment of the present disclosure and an electrode that is notched by the laser notching system.
FIG. 8 is a schematic side view of FIG. 7.
FIG. 9 is a diagram showing a relationship between an impurity barrier unit and a support unit included in a laser notching system according to another embodiment of the present disclosure.
FIG. 10 is a diagram showing a support unit, an impurity barrier unit, a blower unit and a suction unit included in a laser notching system according to another embodiment of the present disclosure and an electrode that is notched by the laser notching system.
FIG. 11 is a schematic side view of FIG. 10.

### DETAILED DESCRIPTION

Hereinafter, exemplary embodiments of the present disclosure will be described in detail with reference to the accompanying drawings. The accompanying drawings illustrate the exemplary embodiments of the present disclosure and together with the following detailed description, serve to provide a further understanding of the technical aspect of the present disclosure, and thus the present disclosure should not be construed as being limited to the drawings. The same reference numeral indicates the same element. Furthermore, in the drawings, the thickness, proportion and dimension of the elements may be exaggerated for effective description.

It should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The terms indicating directions such as upper, lower, left, right, front and rear are used for convenience of description, but it is obvious to those skilled in the art that the terms may change depending on the position of the stated element or an observer.

Therefore, the embodiments described herein and illustrations shown in the drawings are provided to describe the exemplary embodiments of the present disclosure, but not intended to fully describe the technical aspect of the present disclosure, so it should be understood that a variety of other equivalents and modifications could have been made thereto at the time the application was filed.

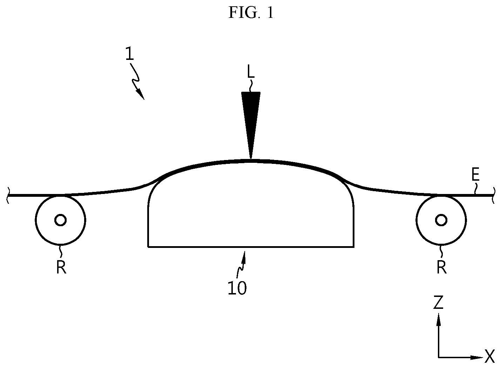

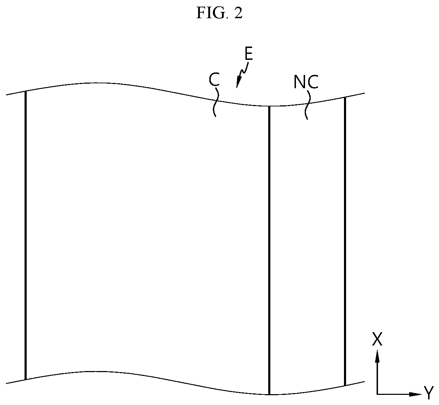

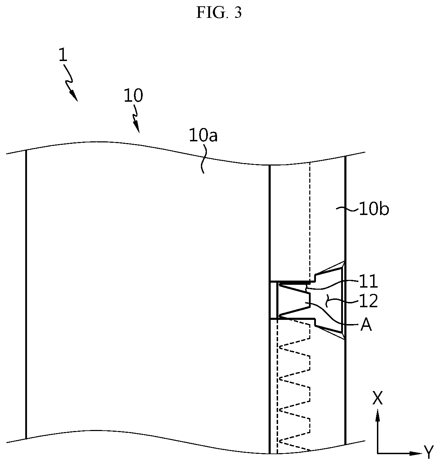

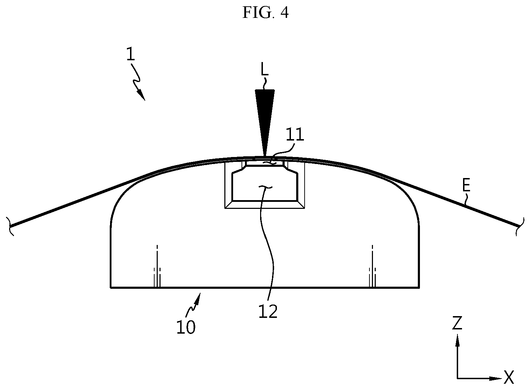

FIG. 1 is a conceptual diagram of a laser notching system according to an embodiment of the present disclosure. FIG. 2 is a diagram showing an electrode E supported by a support unit 10 included in the laser notching system according to an embodiment of the present disclosure. FIG. 3 is a diagram showing the support unit 10 included in the laser notching system according to an embodiment of the present disclosure and the electrode E that is notched by the laser notching system. FIG. 4 is a side view of FIG. 3.

Referring to FIGs. 1 to 4, the laser notching system according to an embodiment of the present disclosure may include a transport unit R, the support unit 10 and a laser unit.

The transport unit R may be configured to transport the electrode E including a coated portion C with active material coating and an uncoated portion NC without active material coating. The transport unit R may include at least one roller along a direction in which the electrode E is transported in order to stably transport the electrode E. The roller may guide the transport of the electrode E. The roller may be a guide roller, and may be a driver roller that is connected to a driving device and can rotate.

The support unit 10 may include a first support unit 10a and a second support unit 10b. The first support unit 10a may be configured to support the coated portion C. The second support unit 10b may be configured to support the uncoated portion NC. The support unit 10 may be configured to support the electrode E transported by the transport unit R. The electrode E may be a double side coated electrode E in which an electrode active material is coated on two surfaces of an electrode current collector.

The first support unit 10a may be configured to support the area of the electrode E corresponding to the coated portion C with active material coating. The first support unit 10a may extend to a predetermined length along the negative direction of the Y axis from one end of the second support unit 10b. The extended length of the first support unit 10a along the negative direction of the Y axis may be equal to or longer than a distance from the boundary between the uncoated portion NC and the coated portion C to the end of the uncoated portion NC. The first support unit 10a may stably support the coated portion C during the transport of the electrode E. However, in the present disclosure, the first support unit 10a is not limited as being configured to support only the coated portion C. That is, in addition to the coated portion C, the first support unit 10a of the present disclosure may be configured to support a part of the uncoated portion NC.

The second support unit 10b may be configured to support the area of the electrode E corresponding to the uncoated portion NC without active material coating. The second support unit 10b may extend to a predetermined length along the positive direction of the Y axis from one end of the first support unit 10a. The extended length of the second support unit 10b along the positive direction of the Y axis may be equal to or longer than a distance from the boundary between the uncoated portion NC and the coated portion C to the end of the uncoated portion NC before the laser notching. The second support unit 10b may stably support the uncoated portion NC during the transport of the electrode E. However, the second support unit 10b of the present disclosure is not limited as being configured to support only the uncoated portion NC. That is, in addition to the uncoated portion NC, the second support unit 10b of the present disclosure may be configured to support a part of the coated portion C.

The second support unit 10b may have a laser receiving portion 11. The laser receiving portion 11 may be formed at a location corresponding to an irradiation area of laser for notching of the uncoated portion NC. The laser receiving portion 11 may be a hole passing through the second support unit 10b. The laser receiving portion 11 may be a groove formed in the second support unit 10b to a predetermined depth.

When the laser receiving portion 11 is a hole, the support unit 10 may not be damaged by the laser irradiation. When the laser receiving portion 11 is a groove, the laser irradiation may damage the inner surface of the groove. However, in this case, the electrode E and the damaged part of the support unit 10 do not come into contact with each other during the transport of the electrode E, so there is no damage risk of the electrode E.

The second support unit 10b may include an impurity discharge portion 12. The impurity discharge portion 12 may communicate with the laser receiving portion 11. The impurity discharge portion 12 may be located below the laser receiving portion 11. The impurity discharge portion 12 may be configured to cause impurities produced at the laser receiving portion 11 during the laser notching to be discharged by gravity. The impurities may be fume and/or spatter produced when the uncoated portion NC melts by the laser.

The impurity discharge portion 12 may be in the shape of a hole or a groove extending from the laser receiving portion 11 in the lateral direction (the positive direction of the Y axis) and downward direction (the negative direction of the Z axis). The impurity discharge portion 12 may gradually become wider along the lateral direction (the positive direction of the Y axis). The connected part of the impurity discharge portion 12 and the laser receiving portion 11 may form a tapered surface or a curved surface to prevent impurity buildup. The connected part of the impurity discharge portion 12 and the laser receiving portion 11 may have protrusions to prevent impurity buildup.

By the aforementioned configuration of the present disclosure, the impurities produced at the laser receiving portion 11 during the laser notching may be discharged into the impurity discharge portion 12. The impurities may be discharged into the impurity discharge portion 12 below the laser receiving portion 11 by gravity.

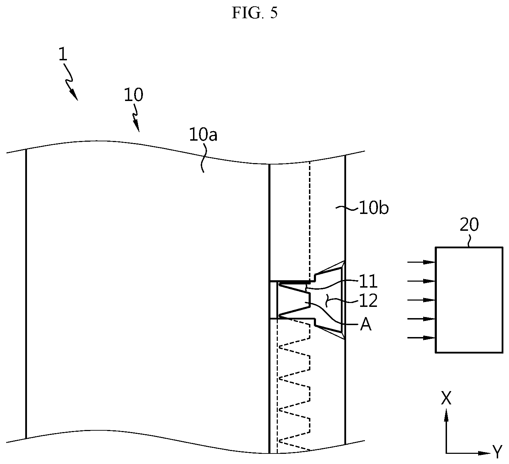

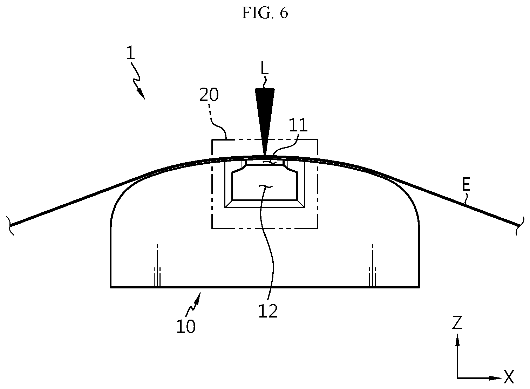

FIG. 5 is a diagram showing the support unit 10 and a suction unit 20 included in the laser notching system according to an embodiment of the present disclosure and the electrode E that is notched by the laser notching system. FIG. 6 is a schematic side view of FIG. 5.

The suction unit 20 will be described with reference to FIGs. 5 and 6.

Referring to FIGs. 5 and 6, the laser notching system may include the suction unit 20.

The suction unit 20 may suck impurities produced during the laser notching of the uncoated portion NC passing the second support unit 10b. The impurities may be fume and/or spatter produced when the uncoated portion NC melts by the laser. The suction unit 20 may include a hood to suck the impurities and a pump connected to the hood to form the suction pressure.

The suction unit 20 may be disposed outside of the second support unit 10b. The suction unit 20 may be located at the side of the second support unit 10b (in the positive direction of the Y axis). The suction unit 20 may be configured to suck impurities in a direction toward the second support unit 10b from the first support unit 10a. The suction unit 20 may be configured to form the suction pressure in the positive direction of the Y axis. The suction unit 20 may be configured to form the suction pressure in a direction approximately perpendicular to the laser irradiation direction of the laser unit L. The suction unit 20 may be configured to form the suction pressure in a direction approximately perpendicular to the movement direction of the electrode E.

The suction unit 20 may be configured to suck air of the impurity discharge portion 12. The suction unit 20 may include the hood and the pump, and the hood may communicate with at least a part of the impurity discharge portion 12.

By the aforementioned configuration of the present disclosure, the suction unit 20 may effectively remove the impurities produced at the laser receiving portion 11 during the laser notching. It may be possible to effectively remove the impurities, thereby preventing the impurities from entering the coated portion C. Since the suction unit 20 communicates with the impurity discharge portion 12, it may be possible to remove the impurities falling by gravity more effectively. Since the suction unit 20 forms the suction pressure in the direction approximately perpendicular to the movement direction of the electrode E and the laser irradiation direction, it may be possible to minimize the influence on the movement of the electrode E. Accordingly, since the electrode E is not affected by the suction unit 20 while moving, the laser focus does not move, thereby achieving effective laser notching. When the suction unit 20 is disposed at the side of the second support unit 10b (in the positive direction of the Y axis), the impurity discharge portion 12 may have an open structure in a direction toward the suction unit 20, i.e., in the lateral direction. Accordingly, the suction pressure by the suction unit 20 may act in a direction from the second support unit 10b toward the suction unit 20. Since the suction pressure by the suction unit 20 acts in the lateral direction, not in a direction approximately perpendicular to the surface of the electrode E, it may be possible to minimize or prevent the electrode E from moving up and down.

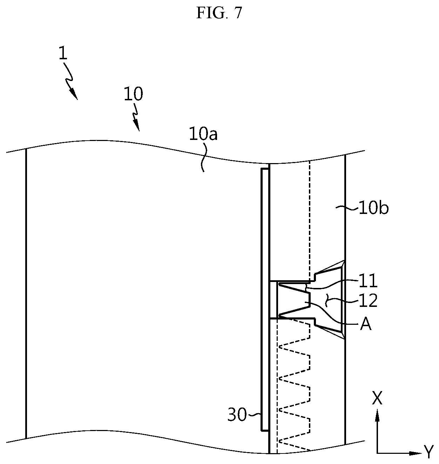

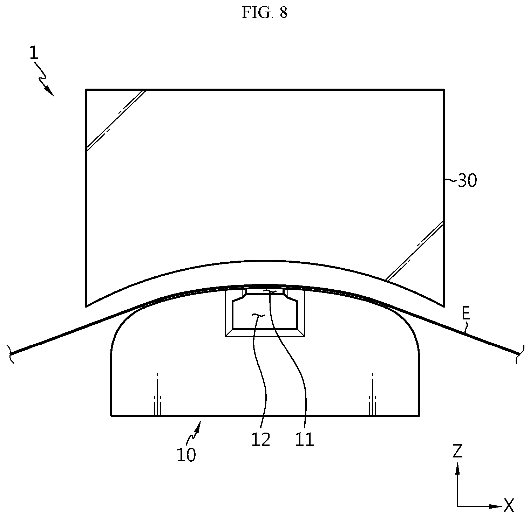

FIG. 7 is a diagram showing the support unit 10 and an impurity barrier unit 30 included in the laser notching system according to another embodiment of the present disclosure and the electrode E that is notched by the laser notching system. FIG. 8 is a schematic side view of FIG. 7.

In addition to the laser notching system described above with reference to FIGs. 5 and 6, the impurity barrier unit 30 will be described.

The impurity barrier unit 30 may be configured to prevent impurities produced during the laser notching of the uncoated portion NC passing the second support unit 10b from shattering to the coated portion C. The impurity barrier unit 30 may be located approximately between the first support unit 10a and the second support unit 10b to prevent impurities produced during the laser notching of the uncoated portion NC from shattering to the coated portion C. The impurity barrier unit 30 may be located adjacent to the laser receiving portion 11.

The impurity barrier unit 30 may be disposed at the boundary area between the first support unit 10a and the second support unit 10b. The impurity barrier unit 30 may extend along the extension direction of the boundary line between the first support unit 10a and the second support unit 10b. The impurity barrier unit 30 may be spaced a predetermined distance apart above the electrode E. The impurity barrier unit 30 may be spaced approximately 50 mm or less apart from the support unit 10. When the gap between the impurity barrier unit 30 and the support unit 10 is larger than about 50 mm, impurities may easily pass between the impurity barrier unit 30 and the support unit 10, resulting in low impurity barrier effect of the impurity barrier unit 30. The impurity barrier unit 30 may be spaced approximately 10 mm or more apart from the support unit 10. When the gap between the impurity barrier unit 30 and the support unit 10 is smaller than about 10 mm, impurities do not spread all over the impurity barrier unit 30 and only accumulate on the impurity barrier unit 30 adjacent to the support unit 10, leading to a build-up of the impurities on the impurity barrier unit 30, resulting in shorter service life of the impurity barrier unit 30. However, the gap between the impurity barrier unit 30 and the support unit 10 is not limited to an absolute value, and when the output of the laser is higher and the impurities spread further, the gap between the impurity barrier unit 30 and the support unit 10 may be adjusted to a relative value in proportion to the output of the laser.

By the aforementioned configuration of the present disclosure, the impurity barrier unit 30 may effectively prevent the impurities produced during the laser notching of the uncoated portion NC passing the second support unit 10b from shattering to the coated portion C. In particular, when the impurity barrier unit 30 is applied together with the suction unit 20, it may be possible to maximize the impurity barrier effect, thereby preventing the quality degradation of the electrode due to impurity buildup on the coated portion C.

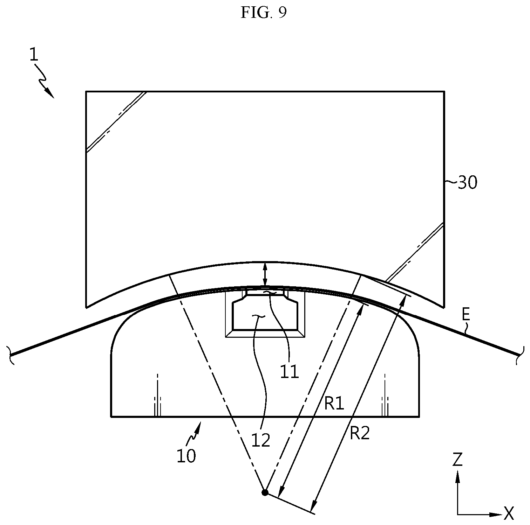

FIG. 9 is a diagram showing a relationship between the impurity barrier unit 30 and the support unit 10 included in the laser notching system according to another embodiment of the present disclosure.

At least a part of the impurity barrier unit 30 may have a specific curvature. At least a part of the support unit 10 may have a specific curvature. The part of the impurity barrier unit 30 having the specific curvature and the part of the support unit 10 having the specific curvature may face each other. The curvature of the part of the impurity barrier unit 30 facing the support unit 10 may be equal to or smaller than the specific curvature of the support unit 10. That is, a radius of curvature R2 of the part of the impurity barrier unit 30 facing the support unit 10 may be equal to or larger than a radius of curvature R1 of the support unit 10. The impurity barrier unit 30 may have a shape that covers the entire support unit 10. When the radius of curvature R2 of the part of the impurity barrier unit 30 facing the support unit 10 is smaller than the radius of curvature R1 of the support unit 10, the impurity barrier unit 30 contacts the support unit 10, which affects the movement of the electrode E.

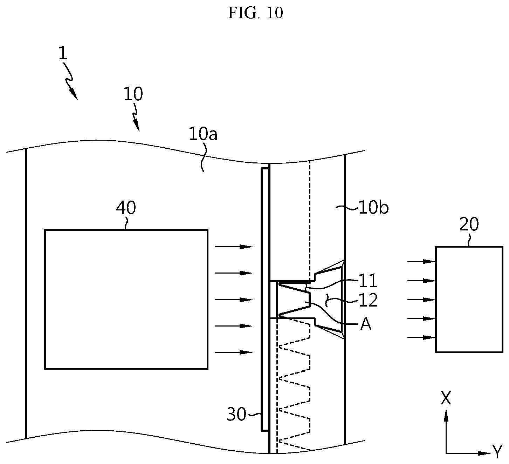

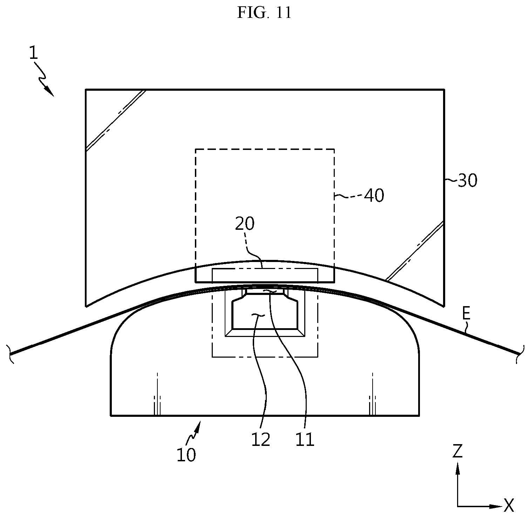

FIG. 10 is a diagram showing the support unit 10, the impurity barrier unit 30, a blower unit 40 and the suction unit 20 included in the laser notching system according to another embodiment of the present disclosure and the electrode E that is notched by the laser notching system. FIG. 11 is a schematic side view of FIG. 10.

In addition to the laser notching system described above, the blower unit 40 will be described with reference to FIGs. 10 and 11.

The blower unit 40 may be configured to prevent impurities produced during the laser notching of the uncoated portion NC passing the second support unit 10b from shattering to the first support unit 10a. The blower unit 40 may be configured to blow air in a direction toward the second support unit 10b from the first support unit 10a. Although the drawings show that the blower unit 40 is provided together with the impurity barrier unit 30 and the suction unit 20, at least one of the blower unit 40, the impurity barrier unit 30 or the suction unit 20 may be provided.

When the blower unit 40 is provided together with the impurity barrier unit 30, the blower unit 40 may be configured to blow air between the impurity barrier unit 30 and the support unit 10. The blower unit 40 may be configured to blow air in the direction toward the second support unit 10b from the first support unit 10a. The blower unit 40 may be configured to blow air in the direction approximately perpendicular to the laser irradiation direction of the laser unit L. The blower unit 40 may be configured to blow air in the direction approximately perpendicular to the movement direction of the electrode E and the laser irradiation direction. The blower unit 40 may be disposed at a location approximately corresponding to the suction unit 20. The blower unit 40 may include a hood to blow air out and a pump connected to the hood to form air pressure.

By the aforementioned configuration of the present disclosure, the blower unit 40 may prevent the impurities produced at the laser receiving portion 11 during the laser notching from building up on the laser receiving portion 11 and/or the uncoated portion NC and/or the second support unit 10b. Since the blower unit 40 is disposed at the location approximately corresponding to the suction unit 20, it may be possible to remove the impurities more effectively. Since the blower unit 40 blows air in the direction approximately perpendicular to the movement direction of the electrode E and the laser irradiation direction, it may be possible to minimize the influence on the movement of the electrode E. Accordingly, since the electrode E is not affected by the blower unit 40 while moving, the laser focus does not move, thereby achieving effective laser notching.

While the exemplary embodiments of the present disclosure have been hereinabove described with reference to the accompanying drawings, it is obvious to those skilled in the art that many different modifications and changes may be made thereto without departing from the scope of the present disclosure. Therefore, the scope of the present disclosure should be interpreted by the appended claims encompassing these many variations.

### [Reference Numerals]

R: Transport unit
E: Electrode
C: Coated portion
NC: Uncoated portion
L: Laser unit
10: Support unit
10a: First support unit
10b: Second support unit
11: Laser receiving portion
20: Suction unit
12: Impurity discharge portion
30: Impurity barrier unit
40: Blower unit

## Claims

1. A laser notching system, comprising:
a transport unit configured to transport an electrode including a coated portion with active material coating and an uncoated portion without active material coating;
a support unit including a first support unit configured to support the coated portion and a second support unit configured to support the uncoated portion;
a laser unit configured to emit a laser to the uncoated portion supported by the second support unit above the second support unit to notch the uncoated portion; and
a suction unit configured to suck impurities produced during the laser notching of the uncoated portion passing the second support unit.

2. The laser notching system according to claim 1, wherein the second support unit includes a laser receiving portion at a location corresponding to an irradiation area of the laser for the notching the uncoated portion.

3. The laser notching system according to claim 2, wherein the laser receiving portion is a hole passing through the second support unit or a groove formed in the second support unit to a predetermined depth.

4. The laser notching system according to claim 1, wherein the suction unit is disposed at a side of the second support unit.

5. The laser notching system according to claim 4, wherein the suction unit is configured to suck the impurities in a direction toward the second support unit from the first support unit.

6. The laser notching system according to claim 2, wherein the laser notching system comprises an impurity discharge portion that communicates with the laser receiving portion.

7. The laser notching system according to claim 6, wherein the suction unit is configured to suck air of the impurity discharge portion.

8. The laser notching system according to claim 1, wherein the laser notching system comprises an impurity barrier unit configured to prevent the impurities produced during the laser notching of the uncoated portion passing the second support unit from shattering to the coated portion.

9. The laser notching system according to claim 8, wherein the impurity barrier unit is disposed at a boundary area between the first support unit and the second support unit, and spaced a predetermined distance apart above the electrode.

10. The laser notching system according to claim 8, wherein at least a part of each of the support unit and the impurity barrier unit has a specific curvature.

11. The laser notching system according to claim 10, wherein the part of the impurity barrier unit having the specific curvature and the part of the support unit having the specific curvature face each other.

12. The laser notching system according to claim 10, wherein the curvature of the part of the impurity barrier unit facing the support unit is equal to or smaller than the specific curvature of the support unit.

13. The laser notching system according to claim 1, wherein the laser notching system comprises a blower unit configured to prevent the impurities produced during the laser notching of the uncoated portion passing the second support unit from shattering to the first support unit.

14. The laser notching system according to claim 13, wherein the blower unit is configured to blow air in a direction toward the second support unit from the first support unit.

15. The laser notching system according to claim 8, comprising a blower unit configured to blow air in a direction toward the second support unit from the first support unit through a space between the impurity barrier unit and the support unit.
